# EUROPÄISCHE PATENTSCHRIFT

(11) **EP 4 146 491 B1**
(45) Veröffentlichungstag und Bekanntmachung des Hinweises auf die Patenterteilung: **15.01.2025**
(21) Anmeldenummer: 21730095.3
(22) Anmeldetag: 04.05.2021
(51) Int. Cl.: B60K 35/60, B60J 1/02

(54) **VORRICHTUNG FÜR EIN KRAFTFAHRZEUG UND KRAFTFAHRZEUG**
APPARATUS FOR A MOTOR VEHICLE, AND MOTOR VEHICLE
DISPOSITIF POUR VÉHICULE AUTOMOBILE ET VÉHICULE AUTOMOBILE

(30) Priorität: 06.05.2020 DE 102020112221
(43) Veröffentlichungstag der Anmeldung: 15.03.2023
(73) Patentinhaber: Continental Automotive Technologies GmbH, 30175 Hannover (DE)
(72) Erfinder: KNÜNZ, Sebastian, 80809 München (DE); VISANO, Gianfranco, 60488 Frankfurt am Main (DE)
(74) Vertreter: Continental Corporation
(86) Internationale Anmeldenummer: PCT/DE2021/200056
(87) Internationale Veröffentlichungsnummer: WO 2021/223821

(56) Entgegenhaltungen:
- FR-A1- 3 077 219
- FR-A1- 3 077 219
- JP-A- 2004 196 184
- JP-A- 2004 196 184
- US-A1- 2019 001 629
- US-A1- 2019 001 629

## Beschreibung

Die Erfindung betrifft eine Vorrichtung für ein Kraftfahrzeug, insbesondere mit einer Anzeigevorrichtung, sowie ein Kraftfahrzeug mit einer solchen Vorrichtung.

In Kraftfahrzeugen werden optische Sender und Empfänger eingesetzt, um beispielsweise Informationen aus dem Innenraum des Kraftfahrzeugs zu erfassen. Beispielsweise ist aus der JP 2004 196184 A eine Scheibe eines Kraftfahrzeugs mit einem daran befestigten Infrarot-Detektionselement bekannt.

Es ist wünschenswert, eine Vorrichtung für ein Kraftfahrzeug anzugeben, die gute optische Eigenschaften und/oder ein gutes optisches Erscheinungsbild aufweist. Es ist zudem wünschenswert, ein Kraftfahrzeug anzugeben, das eine Vorrichtung mit guten optischen Eigenschaften und/oder mit einem guten optischen Erscheinungsbild aufweist.

Gemäß zumindest einer Ausführungsform weist eine Vorrichtung für ein Kraftfahrzeug eine transluzente Frontscheibe auf. Die Frontscheibe ist insbesondere für Strahlung im Infrarotbereich transluzent und/oder transparent. Die Infrarotstrahlung weist beispielsweise eine Wellenlänge zwischen 780 nm und 1 mm auf. Die Vorrichtung weist ein Infrarotbauelement auf. Das Infrarotbauelement ist ausgebildet, Strahlung im Infrarotbereich zu empfangen und/oder zu senden. Das Infrarotbauelement kann auch als optoelektronisches Bauelement bezeichnet werden und weist beispielsweise einen optoelektronischen Halbleiterchip oder eine Mehrzahl von optoelektronischen Halbleiterchips auf.

Die Vorrichtung weist eine Beschichtung auf. Die Beschichtung ist an einer Hauptfläche der Frontscheibe angeordnet. Insbesondere ist die Beschichtung mit der Frontscheibe verbunden. Das Infrarotbauelement ist an der Hauptfläche der Frontscheibe in einem Bauelementbereich angeordnet. Die Beschichtung ist zwischen der Frontscheibe und dem Infrarotbauelement angeordnet. Die Beschichtung ist sowohl in dem Bauelementbereich als auch außerhalb des Bauelementbereichs angeordnet. Die Beschichtung ist durchlässig für Strahlung im Infrarotbereich. Die Beschichtung ist insbesondere transluzent und/oder transparent für Strahlung im Infrarotbereich. Die Beschichtung weist einen vorgegebenen Farbort auf.

Die Anordnung der Beschichtung sowohl in dem Bereich, in dem das Infrarotbauelement angeordnet ist, als auch außerhalb des Bereichs ermöglicht gute optische Eigenschaften der Vorrichtung. Die beschichtete Frontscheibe weist auf einen äußeren Betrachter ein einheitliches Erscheinungsbild auf. Der Bauteilbereich und Bereiche außerhalb des Bauteilbereichs wirken gleichartig. Insbesondere ist kein Unterschied im Farbort zwischen dem Bauelementbereich und Bereichen außerhalb des Bauelementbereichs erkennbar. Zudem ist eine verlässliche Durchlässigkeit der Strahlung im infraroten Bereich gegeben. Die Beschichtung und insbesondere Materialien der Beschichtung sind so ausgewählt, dass Strahlung, die im Betrieb von dem Infrarotbauelement gesendet und/oder empfangen wird, durch die Frontscheibe hindurch und durch die Beschichtung hindurch gelangt, ohne wesentlich absorbiert, reflektiert oder anderweitig ungewollt abgeschwächt zu werden. Der Farbort der Beschichtung wird so vorgegeben, dass ein gewünschter Farbort für den äußeren Betrachter realisiert ist. Insbesondere werden beispielsweise die Materialien der Beschichtung entsprechend ausgewählt. Beispielsweise wird der Farbort in Abhängigkeit von weiteren Elementen ausgewählt, beispielsweise Elementen, die im betriebsfertigen Zustand in unmittelbarer Nachbarschaft der Vorrichtung im Kraftfahrzeug angeordnet sind.

Gemäß zumindest einer Ausführungsform weist die Vorrichtung eine Anzeigevorrichtung auf. Die Anzeigevorrichtung ist ausgebildet zum Anzeigen von visuellen Informationen. Die Anzeigevorrichtung umfasst beispielsweise einen Bildschirm, auch Display genannt. Die Anzeigevorrichtung ist an der Hauptfläche der Frontscheibe in einem Anzeigebereich angeordnet. Die Beschichtung umgibt den Anzeigebereich zumindest teilweise. Der Bauelementbereich ist insbesondere neben dem Anzeigebereich angeordnet. An der Frontscheibe sind somit nebeneinander sowohl der Anzeigebereich als auch der Bauelementbereich ausgebildet. Die Beschichtung ist neben der Anzeigevorrichtung angeordnet. In dem Anzeigebereich ist insbesondere keine Beschichtung vorgesehen. Die Beschichtung ist beispielsweise neben dem Anzeigebereich an einzelnen Seiten oder mehreren Seiten vorgesehen. Gemäß Ausführungsformen umgibt die Beschichtung den Anzeigebereich rahmenartig vollständig. Der Anzeigebereich ist von dem Rahmen begrenzt. Das Infrarotbauelement und die Anzeigevorrichtung sind nebeneinander an der Frontscheibe angeordnet.

Gemäß weiteren Ausführungsformen ist keine Anzeigevorrichtung vorgesehen. Beispielsweise sind stattdessen andere Bauteile an der Frontscheibe zusätzlich zu dem Infrarotbauelement angeordnet. Es ist auch möglich, dass lediglich das Infrarotbauelement und keine weiteren Bauteile an der Frontscheibe vorgesehen sind. Die Beschichtung ist gemäß Ausführungsformen vollflächig oder lediglich teilweise auf der Hauptfläche angeordnet. Die Beschichtung umgibt zumindest den Bauelementbereich und begrenzt insbesondere den Bauelementbereich, sodass die Beschichtung sowohl an dem Infrarotbauelement vorgesehen ist als auch unmittelbar benachbart zum Infrarotbauelement.

Gemäß zumindest einer Ausführungsform weist die Anzeigevorrichtung in einem ausgeschalteten Zustand, beispielsweise in einem unbestromten Zustand, einen weiteren Farbort auf. Der vorgegebene Farbort ist so vorgegeben, dass der vorgegebene Farbort und der weitere Farbort innerhalb vorgegebener Toleranzen gleich sind. Der vorgegebene Farbort ist in Abhängigkeit von dem weiteren Farbort vorgegeben. Beispielsweise ist die Abweichung der beiden Farborte voneinander weniger als 2 %, weniger als 1 % oder weniger als 0,5 %. Auch andere vorgegebene Toleranzen sind möglich. Insbesondere sind der vorgegebene Farbort und der weitere Farbort so aufeinander abgestimmt, dass für einen äußeren Betrachter im normalen Betrieb keine Unterschiede zwischen den Farborten erkennbar sind. Der äußere Betrachter ist insbesondere ein Mensch und die Farborte wirken auf das menschliche Auge gleich.

Beispielsweise wirkt die Anzeigevorrichtung im ausgeschalteten Zustand schwarz. Der vorgegebene Farbort für die Beschichtung wird entsprechend als schwarz wirkend vorgegeben. Somit ist bei ausgeschalteter Anzeigevorrichtung insbesondere kein Unterschied zwischen dem Anzeigebereich, dem Bauelementebereich und weiteren Bereichen außerhalb des Anzeigebereichs und des Bauelementebereichs erkennbar. Beispielsweise wirkt die Anzeigevorrichtung im ausgeschalteten Zustand in einer anderen Farbe als schwarz, beispielsweise bläulich. Der vorgegebene Farbort für die Beschichtung wird korrespondierend zu der anderen Farbe vorgegeben, also beispielsweise bläulich wirkend. Es ist auch eine Abstimmung des vorgegebenen Farborts in Abhängigkeit von anderen Elementen möglich, insbesondere von Elementen außerhalb der Vorrichtung. Beispielsweise wird der Farbort in Abhängigkeit von im eingebauten Zustand der Vorrichtung unmittelbar benachbart zu der Vorrichtung angeordneten Elementen vorgegeben. Wenn das benachbarte Element beispielsweise rot ist, ist der Farbort für die Beschichtung entsprechend rot wirkend vorgegeben.

Gemäß zumindest einer Ausführungsform ist die Beschichtung als Aufdruck ausgebildet. Alternativ oder zusätzlich ist die Beschichtung als Folie ausgebildet. Alternativ oder zusätzlich ist die Beschichtung als Film ausgebildet. Kombinationen sind ebenfalls möglich. Beispielsweise weist die Beschichtung eine Mehrzahl von Teilschichten auf. Die Teilschichten weisen beispielsweise jeweils zueinander unterschiedliche optische Eigenschaften auf. Somit ist sowohl der gewünschte vorgegebene Farbort realisierbar als auch die Durchlässigkeit für die Strahlung im infraroten Bereich realisierbar.

Gemäß zumindest einer Ausführungsform weist die Vorrichtung eine Mehrzahl von Infrarotbauelementen auf. Die Infrarotbauelemente sind jeweils in einem zugeordneten Bauelementbereich angeordnet. Die Bauelementbereiche sind voneinander beabstandet. Beispielsweise weist die Vorrichtung einen Infrarotsender auf. Separat dazu ist ein Infrarotempfänger ausgebildet. Es ist auch möglich, dass mehrere Infrarotsender vorgesehen sind. Beispielsweise ist eine Kamera vorgesehen, die im Infrarotbereich sensibel ist.

Gemäß zumindest einer Ausführungsform ist zwischen den Bauelementbereichen ein Rahmenbereich vorgesehen. Die Beschichtung ist in den Bauelementbereichen und in den Rahmenbereichen gleichartig ausgebildet. Somit ist auch bei einer Vielzahl von Infrarotbauelementen ein einheitliches Erscheinungsbild realisierbar und dabei eine ausreichende Durchlässigkeit für Infrarotstrahlung für die einzelnen Bauelemente gewährleistet.

Die Vorrichtung ermöglicht somit insbesondere das Einbinden der Anzeigevorrichtung und eines Infrarotbauelements oder mehrerer Infrarotbauelemente an eine gemeinsame Frontscheibe. Die Beschichtung ermöglicht ein Anordnen der Bauelemente, ohne dass diese für das menschliche Auge sofort erkennbar sind. Die Bauelemente senden und empfangen ihre Strahlung im Betrieb durch die Beschichtung und die Frontscheibe hindurch. Die Bauelemente sind beispielsweise Abstandssensoren, Infrarotlichtquellen, Kameras oder weitere Bauelemente, die dazu dienen, Informationen über den Innenraum eines Kraftfahrzeugs, Betriebszustände oder Eigenschaften eines Nutzers des Fahrzeugs zu ermitteln. Die Beschichtung ermöglicht ein einheitliches Erscheinungsbild, da die Beschichtung einheitliche optische Eigenschaften aufweist, sowohl im Bauelementbereich, als auch außerhalb des Bauelementbereichs. Somit werden unterschiedliche optische Eigenschaften zwischen dem Bauteilbereich und einer sonstigen Beschichtung zum Umgeben der Anzeigevorrichtung vermieden.

Die Beschichtung mit dem vorgegebenen Farbort wirkt für das menschliche Auge insbesondere möglichst schwarz und ist möglichst gut auf den Farbort der ausgeschalteten Anzeigevorrichtung abgestimmt. Somit ist ein gemeinsames Anordnen der Anzeigevorrichtung und der Infrarotbauelemente an der Frontscheibe möglich und dabei ein Verbergen der Infrarotbauelemente nach außen realisierbar, wobei die Funktionalität der Infrarotbauelemente nicht oder nicht wesentlich beeinflusst wird.

Beispielsweise ist die gesamte Hauptfläche der Frontscheibe mit Ausnahme des Anzeigebereichs mit der Beschichtung bedeckt. Es ist beispielsweise keine weitere zusätzliche Beschichtung aus anderen Materialien vorgesehen oder notwendig.

Gemäß zumindest einer Ausführungsform weist ein Kraftfahrzeug eine Vorrichtung gemäß zumindest einer hier beschriebenen Ausführungsform auf. Die Vorrichtung ist in einem Innenraum des Kraftfahrzeugs angeordnet und ist beispielsweise Teil eines Informationssystems des Kraftfahrzeugs.

Weitere Vorteile, Merkmale und Weiterbildungen ergeben sich aus den nachfolgenden, in Verbindung mit den Figuren erläuterten Ausführungsbeispielen.

Gleiche, gleichartige und gleich wirkende Elemente können figurenübergreifend mit den gleichen Bezugszeichen versehen sein.

Es zeigen:
Figur 1 eine schematische Darstellung eines Fahrzeugs mit einer Vorrichtung gemäß einem Ausführungsbeispiel, und
Figur 2 eine schematische Querschnittsansicht einer Vorrichtung gemäß einem Ausführungsbeispiel.

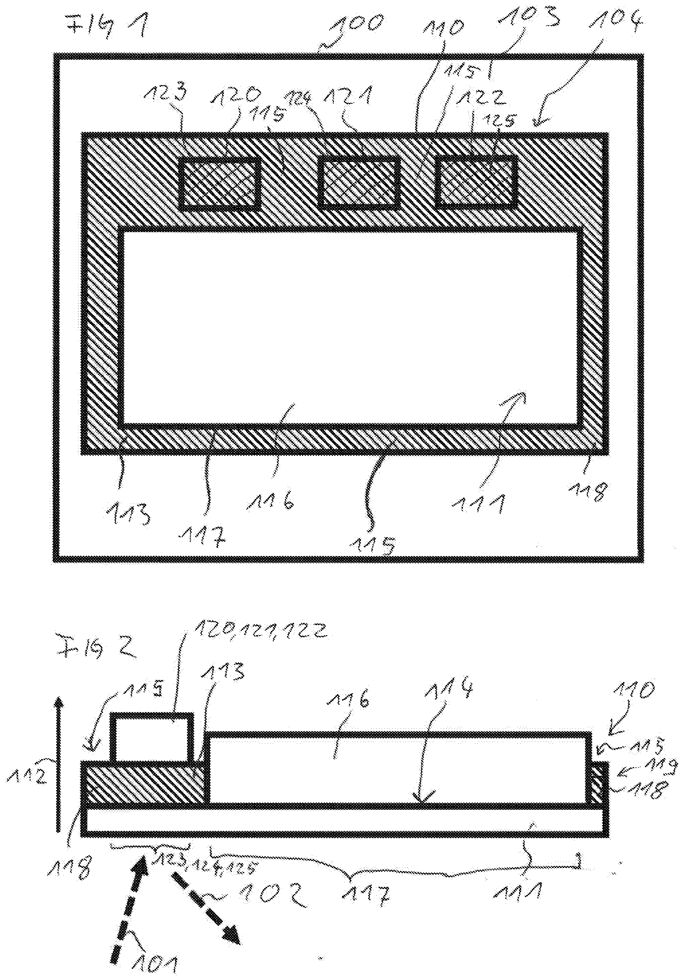

Figur 1 zeigt schematisch ein Kraftfahrzeug 100, beispielsweise einen Personenkraftwagen. Das Kraftfahrzeug 100 weist einen Innenraum 103 auf. In dem Innenraum 103 ist eine Vorrichtung 110 angeordnet. Die Vorrichtung 110 ist beispielsweise in einem Frontbereich des Kraftfahrzeugs 100 angeordnet. Die Vorrichtung 110 ist beispielsweise Teil eines Informationssystems 104 des Kraftfahrzeugs. Die Vorrichtung 110 dient beispielsweise zum Darstellen von visuellen Informationen für einen Nutzer des Kraftfahrzeugs 100. Zudem dient die Vorrichtung 110 beispielsweise dazu, Informationen über den Innenraum 103 zu ermitteln. Alternativ oder zusätzlich sollen Informationen über einen Nutzer des Kraftfahrzeugs 100 ermittelt werden.

Die Vorrichtung 110 weist eine transluzente Frontscheibe 111 auf. Die Frontscheibe 111 ist insbesondere für Strahlung im sichtbaren Bereich durchlässig. Zusätzlich ist die Frontscheibe 111 für Strahlung im Infrarotbereich durchlässig. Die Frontscheibe 111 ist beispielsweise aus einem Glas oder einem Kunststoff gebildet. Die Frontscheibe 111 grenzt beispielsweise mit einer Außenseite an den Innenraum 103 an. Ein Nutzer blickt im Betrieb auf die Außenseite der Frontscheibe 111. Die Frontscheibe 111 weist eine der Außenseite gegenüberliegende Hauptfläche 114 auf, wie auch aus Figur 2 ersichtlich ist. Die Hauptfläche 114 ist im betriebsfertigen Zustand dem Innenraum 103 abgewandt. Entlang der Hauptfläche 114 weist die Frontscheibe eine größere Ausdehnung auf als quer dazu.

An der Hauptfläche 114 ist in einem Anzeigebereich 117 eine Anzeigevorrichtung 116 zum Anzeigen von visuellen Informationen angeordnet. Die Anzeigevorrichtung 116 ist beispielsweise ein LCD-Display, ein OLED-Display oder weist eine andere Art von Anzeige auf.

Außerhalb des Anzeigebereichs 117 ist an der Hauptfläche 114 eine Beschichtung 113 vorgesehen. Die Beschichtung ist insbesondere unmittelbar auf der Hauptfläche 114 angeordnet. Die Beschichtung 113 ist für eingehende Strahlung 101 im Infrarotbereich und ausgehende Strahlung 102 im Infrarotbereich durchgängig. Für Strahlung im sichtbaren Bereich ist die Beschichtung 113 insbesondere nicht durchgängig. Die Beschichtung 113 wirkt für das menschliche Auge insbesondere schwarz. Die Beschichtung 113 wirkt für das menschliche Auge insbesondere farblich so, wie die Farbe der Anzeigevorrichtung 116 im ausgeschalteten Zustand. Beim Blick auf die Frontscheibe 111 aus dem Innenraum 103 ist somit für den menschlichen Betrachter bei ausgeschalteter Anzeigevorrichtung 116 insbesondere kein Unterschied zwischen der Anzeigevorrichtung 116 und der Beschichtung 113 erkennbar. Die Beschichtung 113 umgibt den Anzeigebereich 117 beispielsweise vollständig und bildet so einen Rahmen 118 aus.

Auf einer der Frontscheibe 111 abgewandten Seite der Beschichtung 113 ist ein Infrarotbauelement 120 angeordnet. Im dargestellten Ausführungsbeispiel sind drei Infrarotbauelemente 120, 121, 122 nebeneinander angeordnet. Es sind auch mehr oder weniger Infrarotbauelemente möglich. Die Infrarotbauelemente sind beispielsweise Infrarotsender, Infrarotempfänger oder eine Kombination daraus. Das Infrarotbauelement 120 ist in einem zugeordneten Bauelementbereich 123 angeordnet. Das Infrarotbauelement 121 ist in einem zugeordneten Bauelementbereich 124 angeordnet. Das Infrarotbauelement 122 ist in einem Bauelementbereich 125 angeordnet. Somit ist im dargestellten Ausführungsbeispiel jedes der Infrarotbauelemente 120, 121, 122 in einem eigenen Bauelementbereich 123, 124, 125 vorgesehen. Die einzelnen Bauelementbereiche 123, 124, 125 sind beabstandet voneinander angeordnet. Zwischen den Bauelementbereichen 123, 124, 125 ist jeweils ein Rahmenbereich 115 angeordnet. In dem Rahmenbereich ist die Beschichtung 113 ausgebildet, jedoch kein Infrarotbauelement 120, 121, 122 angeordnet. Durch den Rahmenbereich 115 wird im Betrieb aktiv insbesondere keine Strahlung 102 ausgesandt beziehungsweise eingehende Strahlung 101 empfangen und ausgewertet. Es ist auch möglich, dass mehrere Infrarotbauelemente in einem gemeinsamen Bauelementbereich angeordnet sind.

In den Bauelementbereichen 123, 124, 125 ist entlang einer Stapelrichtung 112 also zunächst die Frontscheibe 111 angeordnet. Auf der Hauptfläche 114 ist nachfolgend die Beschichtung 113 vorgesehen. Nachfolgend ist ein Infrarotbauelement 120, 121, 122 vorgesehen. Die Stapelrichtung 112 verläuft in Figur 2 senkrecht zur Hauptfläche 114.

Die Beschichtung 113 ist gleichartig sowohl in den Bauelementbereichen 123, 124, 125 als auch außerhalb der Bauelementbereiche beispielsweise in den Rahmenbereichen 115 vorgesehen. Der Rahmen 118 ist insbesondere überall aus der Beschichtung 113 gebildet. Die Anzeigevorrichtung 116 ist rahmenartig vollständig von der Beschichtung 113 umgeben. Der Rahmen 118 umgibt die Anzeigevorrichtung 116 und bildet die Bauelementbereiche 123, 124, 125 aus. Der Rahmen ist auch außerhalb der Bauelementbereiche 123, 124, 125 durchlässig für Strahlung im Infrarotbereich.

Ein Farbort des Rahmens 118 aus der Beschichtung 113 ist so vorgegeben, dass dieser Farbort mit einem weiteren Farbort möglichst übereinstimmt. Der weitere Farbort ist der Farbort der Anzeigevorrichtung 116 im ausgeschalteten Zustand. Bei ausgeschalteter Anzeigevorrichtung ist somit möglichst kein Unterschied für den äußeren Betrachter aus dem Innenraum 103 erkennbar zwischen dem Anzeigebereich 117, dem Rahmenbereich 115 und den Bauelementbereichen 123, 124, 125. Sowohl die Bauelementbereiche 123, 124, 125 als auch die Rahmenbereiche 115 und der Anzeigebereich 117 wirken gleichartig schwarz. Insbesondere wirken die Rahmenbereiche 115 und die Bauelementbereiche 123, 124, 125 gleichartig schwarz, da sie durch ein und dieselbe Beschichtung 113 ausgebildet sind.

Die Beschichtung 113 ist beispielsweise auf die Hauptfläche 114 aufgedruckt. Alternativ oder zusätzlich ist die Beschichtung 113 auf die Hauptfläche 114 als vorgefertigte Folie aufgebracht, beispielsweise aufgeklebt. Es ist auch möglich, die Beschichtung 113 als Film auf der Hauptfläche 114 auszubilden.

Beispielsweise ist die Beschichtung 113 als eine einzige Schicht aufgebracht. Gemäß weiterer Ausführungsbeispiele weist die Beschichtung 113 beispielsweise eine Mehrzahl 119 von Teilschichten auf, die entlang der Stapelrichtung 112 aufeinander aufgeschichtet sind. Beispielsweise weisen die Teilschichten zueinander unterschiedliche optische Eigenschaften auf. Dies ermöglicht beispielsweise, sowohl den vorgegebenen Farbort gewünscht einzustellen, beispielsweise schwarz, als auch die gewünschte Durchlässigkeit für die Infrarotstrahlung zu realisieren.

Beispielsweise ist die Beschichtung 113 aus einem Polymer gebildet oder weist eine Mischung aus unterschiedlichen Polymeren auf. Beispielsweise weist die Beschichtung 113 doppelbrechende Schichten auf Polymerbasis auf. Auch andere Materialien und optische Eigenschaften der Beschichtung 113 und der Mehrzahl 119 von Teilschichten sind möglich.

Die Vorrichtung 110 ermöglicht die Anordnung der Infrarotbauelemente 120, 121, 122 und der Anzeigevorrichtung 116 an der gemeinsamen Frontscheibe 111. Beispielsweise sind so Abstandssensoren und/oder ein Kamerasystem und ein Display kombinierbar. Die Beschichtung 113, deren Farbe auf die Anzeigevorrichtung im ausgeschalteten Zustand abgestimmt ist, ermöglicht gute optische Eigenschaften sowohl im Hinblick auf die Infrarotdurchlässigkeit als auch die einheitliche Erscheinungsform der Vorrichtung 110 für den Nutzer im betriebsfertigen Zustand.

### Bezugszeichen

100 Kraftfahrzeug
101, 102 Strahlung
103 Innenraum
104 Informationssystem
110 Vorrichtung
111 transluzente Frontscheibe
112 Stapelrichtung
113 Beschichtung
114 Hauptfläche
115 Rahmenbereich
116 Anzeigevorrichtung
117 Anzeigebereich
118 Rahmen
119 Mehrzahl von Teilschichten
120, 121, 122 Infrarotbauelement
123, 124, 125 Bauelementbereich

## Patentansprüche

1. Vorrichtung für ein Kraftfahrzeug (100), aufweisend:
- eine transluzente Frontscheibe (111),
- ein Infrarotbauelement (120, 121, 122), das ausgebildet ist, Strahlung (101, 102) im Infrarotbereich zu empfangen und/oder zu senden,
- eine Beschichtung (113), die an einer Hauptfläche (114) der Frontscheibe (111) angeordnet ist, wobei
- das Infrarotbauelement (120, 121, 122) an der Hauptfläche (114) der Frontscheibe (111) in einem Bauelementbereich (123, 124, 125) angeordnet ist,
**dadurch gekennzeichnet, dass**
- die Beschichtung (113) zwischen der Frontscheibe (111) und dem Infrarotbauelement (120, 121, 122) angeordnet und sowohl in dem Bauelementbereich (123, 124, 125) als auch außerhalb des Bauelementbereichs (123, 124, 125) angeordnet ist, und
- die Beschichtung (113) durchlässig für Strahlung (101, 102) im Infrarotbereich ist und einen vorgegebenen Farbort aufweist.

2. Vorrichtung nach Anspruch 1, aufweisend
- eine Anzeigevorrichtung (116) zum Anzeigen von visuellen Informationen, wobei die Anzeigevorrichtung (116) an der Hauptfläche (114) der Frontscheibe (111) in einem Anzeigebereich (117) angeordnet ist, wobei die Beschichtung (113) den Anzeigebereich (117) zumindest teilweise umgibt.

3. Vorrichtung nach Anspruch 2,
bei der die Beschichtung (113) den Anzeigebereich (117) rahmenartig vollständig umgibt.

4. Vorrichtung nach Anspruch 2 oder 3,
bei der die Anzeigevorrichtung (116) in einem ausgeschalteten Zustand einen weiteren Farbort aufweist, wobei der vorgegebene Farbort so vorgegeben ist, dass der vorgegebene Farbort und der weitere Farbort innerhalb vorgegebener Toleranzen gleich sind.

5. Vorrichtung nach einem der Ansprüche 1 bis 4,
bei der die Beschichtung (113) als Aufdruck, Folie und/oder Film ausgebildet ist.

6. Vorrichtung nach einem der Ansprüche 1 bis 5,
bei der die Beschichtung (113) aus einer Mehrzahl (119) von Teilschichten aufgebaut ist, wobei die Teilschichten jeweils zueinander unterschiedliche optische Eigenschaften aufweisen.

7. Vorrichtung nach einem der Ansprüche 1 bis 6,
bei der der vorgegebene Farbort so vorgegeben ist, dass der vorgegebene Farbort innerhalb vorgegebener Toleranzen schwarz für einen äußeren Betrachter ist.

8. Vorrichtung nach einem der Ansprüche 1 bis 7,
aufweisend eine Mehrzahl von Infrarotbauelementen (120, 121, 123), die in jeweils zugeordneten Bauelementbereichen (123, 124, 125) angeordnet sind, wobei die Bauelementbereiche voneinander beabstandet sind.

9. Vorrichtung nach Anspruch 8,
bei der zwischen den Bauelementbereichen (123, 124, 125) ein Rahmenbereich (115) vorgesehen ist, wobei die Beschichtung in den Bauelementbereichen (123, 124, 125) und in den Rahmenbereichen (115) gleichartig ausgebildet ist.

10. Kraftfahrzeug, aufweisend eine Vorrichtung (110) nach einem der Ansprüche 1 bis 9,
wobei die Vorrichtung (110) in einem Innenraum (103) des Kraftfahrzeugs (100) angeordnet ist und Teil eines Informationssystems (104) des Kraftfahrzeugs (100) ist.

## Claims

1. Apparatus for a motor vehicle (100), comprising:
- a translucent windscreen (111),
- an infrared component (120, 121, 122) configured to receive and/or transmit radiation (101, 102) in the infrared range,
- a coating (113) arranged on a main surface (114) of the windscreen (111), wherein
- the infrared component (120, 121, 122) is arranged on the main surface (114) of the windscreen (111) in a component region (123, 124, 125),
**characterized in that**
- the coating (113) is arranged between the windscreen (111) and the infrared component (120, 121, 122) and is arranged both in the component region (123, 124, 125) and outside the component region (123, 124, 125), and
- the coating (113) is transmissive to radiation (101, 102) in the infrared range and has a specified colour locus.

2. Apparatus according to Claim 1, comprising
- a display apparatus (116) for displaying visual information, wherein the display apparatus (116) is arranged on the main surface (114) of the windscreen (111) in a display region (117), wherein the coating (113) at least partly surrounds the display region (117).

3. Apparatus according to Claim 2,
wherein the coating (113) completely surrounds the display region (117) in a frame-like manner.

4. Apparatus according to Claim 2 or 3,
wherein the display apparatus (116) has a further colour locus in a switched-off state, wherein the specified colour locus is specified such that the specified colour locus and the further colour locus are identical within specified tolerances.

5. Apparatus according to any of Claims 1 to 4,
wherein the coating (113) is embodied as an imprint, a foil and/or a film.

6. Apparatus according to any of Claims 1 to 5,
wherein the coating (113) is constructed from a plurality (119) of partial layers, wherein the partial layers each have mutually different optical properties.

7. Apparatus according to any of Claims 1 to 6,
wherein the specified colour locus is specified such that the specified colour locus is black to an external observer within specified tolerances.

8. Apparatus according to any of Claims 1 to 7,
comprising a plurality of infrared components (120, 121, 123) arranged in respectively assigned component regions (123, 124, 125), wherein the component regions are spaced apart from one another.

9. Apparatus according to Claim 8,
wherein a frame region (115) is provided between the component regions (123, 124, 125), wherein the coating is embodied in an identical fashion in the component regions (123, 124, 125) and in the frame regions (115).

10. Motor vehicle, comprising an apparatus (110) according to any of Claims 1 to 9,
wherein the apparatus (110) is arranged in an interior (103) of the motor vehicle (100) and is part of an information system (104) of the motor vehicle (100).

## Revendications

1. Dispositif pour un véhicule automobile (100), présentant :
- un pare-brise (111) translucide,
- un composant infrarouge (120, 121, 122) qui est réalisé pour recevoir et/ou émettre un rayonnement (101, 102) dans le domaine infrarouge,
- un revêtement (113) qui est disposé sur une surface principale (114) du pare-brise (111), dans lequel
- le composant infrarouge (120, 121, 122) est disposé sur la surface principale (114) du pare-brise (111) dans une zone de composant (123, 124, 125),
**caractérisé en ce que**
- le revêtement (113) est disposé entre le pare-brise (111) et le composant infrarouge (120, 121, 122) et est disposé à la fois dans la zone de composant (123, 124, 125) et à l'extérieur de la zone de composant (123, 124, 125), et
- le revêtement (113) est transparent au rayonnement (101, 102) dans le domaine infrarouge et présente une localisation chromatique prédéfinie.

2. Dispositif selon la revendication 1, présentant
- un dispositif d'affichage (116) pour afficher des informations visuelles, le dispositif d'affichage (116) étant disposé sur la surface principale (114) du pare-brise (111) dans une zone d'affichage (117), le revêtement (113) entourant au moins partiellement la zone d'affichage (117).

3. Dispositif selon la revendication 2,
dans lequel le revêtement (113) entoure entièrement la zone d'affichage (117) à la manière d'un cadre.

4. Dispositif selon la revendication 2 ou 3,
dans lequel le dispositif d'affichage (116) présente dans un état éteint une localisation chromatique supplémentaire, dans lequel la localisation chromatique prédéfinie est prédéfinie de telle sorte que la localisation chromatique prédéfinie et la localisation chromatique supplémentaire sont identiques dans des tolérances prédéfinies.

5. Procédé selon l'une quelconque des revendications 1 à 4,
dans lequel le revêtement (113) est réalisé sous forme d'impression, de feuille et/ou de film.

6. Procédé selon l'une quelconque des revendications 1 à 5,
dans lequel le revêtement (113) est composé d'une pluralité (119) de couches partielles, les couches partielles présentant respectivement des propriétés optiques différentes les unes par rapport aux autres.

7. Procédé selon l'une quelconque des revendications 1 à 6,
dans lequel la localisation chromatique prédéfinie est prédéfinie de telle sorte que la localisation chromatique prédéfinie est pour un observateur externe noire dans des tolérances prédéfinies.

8. Procédé selon l'une quelconque des revendications 1 à 7,
présentant une pluralité de composants infrarouges (120, 121, 123) qui sont disposés dans des zones de composant (123, 124, 125) respectivement associées, les zones de composant étant espacées les unes des autres.

9. Dispositif selon la revendication 8,
dans lequel une zone de cadre (115) est prévue entre les zones de composant (123, 124, 125), le revêtement étant réalisé de manière identique dans les zones de composant (123, 124, 125) et dans les zones de cadre (115).

10. Véhicule automobile présentant un dispositif (110) selon l'une quelconques des revendications 1 à 9,
dans lequel le dispositif (110) est disposé dans un habitacle (103) du véhicule automobile (100) et fait partie d'un système d'information (104) du véhicule automobile (100).
